# EUROPÄISCHE PATENTSCHRIFT

(11) **EP 2 384 922 B1**
(45) Veröffentlichungstag und Bekanntmachung des Hinweises auf die Patenterteilung: **28.02.2024**
(21) Anmeldenummer: 11163989.4
(22) Anmeldetag: 28.04.2011
(51) Int. Cl.: B60L 53/10, B60L 53/14, B60L 53/63, B60L 53/65, B60L 55/00, B60L 3/00, B60L 3/04, B60L 8/00

(54) **Stromaufladevorrichtung für ein Elektrofahrzeug**
Electricity charger for an electric vehicle
Dispositif de chargement de courant pour un véhicule électrique

(30) Priorität: 05.05.2010 DE 102010028626
(43) Veröffentlichungstag der Anmeldung: 09.11.2011
(73) Patentinhaber: Bender GmbH & Co. KG, 35305 Grünberg (DE)
(72) Erfinder: Hofheinz, Wolfgang, 35305 Grünberg (DE)
(74) Vertreter: advotec.

(56) Entgegenhaltungen:
- EP-A2- 2 006 974
- DE-A1-102007 046 483
- DE-A1-102009 045 711
- DE-T5-112005 001 167
- JP-A- 2000 354 332
- Hager Thealit Vertriebs Gmbh: "Sicherheit durch allstromsensitive FI-Schutzschalter Typ B", , 30. September 2008 (2008-09-30), XP055341211, Gefunden im Internet: URL:http://www.elektrokalischko.at/content /FISchutzschalterTypB.pdf [gefunden am 2017-02-01]
- YU DU ET AL: "Review of non-isolated bi-directional DC-DC converters for plug-in hybrid electric vehicle charge station application at municipal parking decks", APPLIED POWER ELECTRONICS CONFERENCE AND EXPOSITION (APEC), 2010 TWENTY-FIFTH ANNUAL IEEE, IEEE, PISCATAWAY, NJ, USA, 21 February 2010 (2010-02-21), pages 1145-1151, XP031649559, ISBN: 978-1-4244-4782-4
- Anonymous: "Fehlerstrom-Schutzschalter - Wikipedia", , 4 May 2010 (2010-05-04), XP055812779, Retrieved from the Internet: URL:https://de.wikipedia.org/w/index.php?t itle=Fehlerstrom-Schutzschalter&oldid=7393 9863 [retrieved on 2021-06-10]

## Beschreibung

Die Erfindung geht aus von einer Stromaufladevorrichtung für ein Elektrofahrzeug mit elektrischem Energiespeicher, umfassend zumindest eine Gleichrichtereinrichtung zur Umwandlung einer Versorgungsspannung in eine Auflade-Gleichspannung, eine Kontaktierungseinrichtung zur Kontaktierung eines Steckverbindungs-Stromanschlusses des Elektrofahrzeugs und einer Differenzstrom-Überwachungseinrichtung zur Detektion einer Stromdifferenz in der Kontaktierungseinrichtung und/oder dem Elektrofahrzeug während eines Aufladevorgangs des Energiespeichers des Elektrofahrzeugs.

Zur Aufladung eines Energiespeichers eines Elektrofahrzeugs, darunter sind sowohl rein stromangetriebene Elektrofahrzeuge als auch Hybridfahrzeuge, die eine wechselseitige Kombination von elektrischem und verbrennungsmotorischem Antrieb beinhalten, zu verstehen, wird elektrische Energie aus einem Energieversorgungsnetz in Stillstandszeiten entnommen. Die Ankopplung des Elektrofahrzeugs an das Stromnetz erfolgt üblicherweise mittels eines Anschlusskabels, das in eine Steckdose gesteckt wird, oder das mit einer Stromaufladevorrichtung, die auch als Stromtankstelle bezeichnet wird, verbunden ist. Üblicherweise befindet sich eine Ladereglereinrichtung sowie hierzu benötigte Gleichrichter- und Schutzeinrichtungen im Fahrzeug, so dass das Fahrzeug an jeder haushaltsüblichen Steckdose aufgeladen werden kann. Daneben existieren Stromtankstellen, die externe Ladegeräte umfassen und mittels derer spezifische Energiespeicher von Elektrofahrzeugen aufgeladen werden können. Solche Elektrofahrzeuge können zweiradangetriebene Fahrzeuge, insbesondere Pedelecs, Elektromopeds oder Elektromotorräder oder vierradangetriebene Personenkraftwagen sowie Lastkraftwagen bzw. Transportfahrzeuge sein. In der Regel kommen als Energiespeicher elektrochemische Energiespeicher wie Akkumulatoren zum Einsatz, die sowohl einen oder mehrere Elektromotoren zum Antrieb des Fahrzeugs mit Energie versorgen, als auch die Fahrzeugelektronik betreiben. In den meisten Fällen sind solche Elektrofahrzeuge mit internen Ladereglereinrichtungen ausgestattet, die eine Netzwechselspannung in eine Gleichspannung einer Stromaufladevorrichtung umwandeln und hierdurch einen Anschluss an eine Haushaltssteckdose ermöglichen, um eine angepasste Ladespannung des internen elektrischen Energiespeichers bereitstellen zu können.

Zum Personenschutz vor gefährlichen Fehlerströmen bei elektrischen Defekten an der Fahrzeugelektronik oder zur Schädigungen des Fahrzeugs nach Kurzschlüsse, Isolationsfehler oder Kriechströme sind nach dem Normentwurf E DIN IEC 61851-21 (VDE0122-1): 2008-12 "Konduktive Ladesysteme für Elektrofahrzeuge - Teil 1: Allgemeine Anforderungen" vorgesehen, dass ein Schutz bei indirektem Berühren durch eine zusätzliche oder verstärkte Isolierung, einen Potentialausgleich, eine Schutzschirmung, eine automatische Abtrennung der Stromversorgung oder eine einfache Trennung getroffen werden soll. Solche aus dem Stand der Technik bekannten Schutzmaßnahmen bei indirektem Berühren sind beim flächenhaften Einsatz von Elektrofahrzeugen kaum ausreichend, um einen sicheren Schutz eines Fahrzeuginsassen sowie der verwendeten technischen Einrichtungen zu garantieren. Des Weiteren ist aus Gewichts- und Effizienzgründen zu erwarten, dass zukünftig ein Ladegerät außerhalb des Fahrzeugs in speziell ausgelegten Stromaufladevorrichtungen, sprich Stromtankstellen installiert sein wird. Diese Stromaufladevorrichtungen werden über ein Ladekabel mit dem Energiespeicher des Elektrofahrzeugs verbunden, um dieses mittels Gleichspannung und einem geregelten Ladeverfahren aufzuladen. Um einen umfassenden Schutz bei indirektem Berühren und gegen Schädigung oder Zerstörung der Fahrzeugelektronik sicherzustellen reichen die oben vorgestellten konventionellen Schutzmaßnahmen, insbesondere Absicherungen durch Fehlerstromschutzeinrichtungen (RCD) des Typs A, die lediglich Wechselstromdifferenzfehler erkennen können, nicht aus, da diese bei der zuverlässigen Detektion von Gleichstromfehlern oder von Wechselstromfehlern, denen ein Gleichstrom überlagert ist, wie sie beim Betrieb eines Elektrofahrzeugs auftreten können, versagen. Um einen umfassenden Schutz gegen Gleichstrom, Wechselstrom oder gemischten Fehlerströmen sicherzustellen müssen geeignete Schutzmaßnahmen innerhalb der Stromaufladevorrichtung ergriffen werden, die einen zuverlässigen Aufladevorgang sicherstellen, ein unbeabsichtigtes Abschalten der Ladeeinrichtung unterbinden und einen hohen Personenschutz gegen elektrischen Schlag gewährleisten können, so dass auch eine externe Gleichspannungs-Stromaufladevorrichtung zur Schnellaufladung eines Fahrzeugs bereitgestellt werden kann.

Die Offenlegungsschrift EP 2 006 974 A2 zeigt eine Lade-/Entladevorrichtung für eine Pufferbatterie, die in einem ersten Modus über einen Gleichrichter aus einem Wechselstromnetz geladen wird. Nach Umschalten eines Steuerschaltkreises kann die aufgeladene Pufferbatterie ihrerseits über einen DC-DC-Umrichter eine Fahrbatterie eines Elektrofahrzeugs aufladen oder in einem dritten Modus von der (Fahr-) Batterie geladen werden.

Die Druckschrift "Sicherheit durch allstromsensitive FI-Schutzschalter Typ B" ist eine Technische Information der Firma Hager und beschreibt die Grundlagen und Anwendungen von allstromsensitiven (Typ B) Fehlerstrom-Schutzeinrichtungen.

Die Offenlegung DE 10 2009 045 711 A1 offenbart eine Ladevorrichtung mit Datenschnittstelle für Elektrofahrzeuge, wobei über das Ladekabel auch fahrzeugbezogene Daten zu Wartungszwecken ausgetauscht werden können.

In der Druckschrift DE 10 2007 046 483 A1 ist eine Schaltungsanordnung zur zweipoligen, besonders zuverlässigen und genauen Überwachung des Isolationswiderstands in einem Elektrofahrzeug beschrieben. Ein Datenaustausch zwischen der Isolationsüberwachungseinrichtung und einer externen Ladevorrichtung ist nicht vorgesehen.

Die Offenlegungsschrift JP 2000 354332 A beschreibt eine Ladevorrichtung für ein Elektrofahrzeug, die eine Fehlerstrom-Erkennungsschaltung mit einem Summenstromwandler aufweist. Die Fehlerstrom-Erkennungsschaltung überwacht die Wechselstromleiter und trennt diese im Fehlerfall mittels eines Relais auf. In dem Elektrofahrzeug wird die Wechselspannung über ein in dem Elektrofahrzeug angeordnetes Batterieladegerät gleichgerichtet und der Fahrzeugbatterie zugeführt.

Die Druckschrift DE 11 2005 001 167 T5 beschreibt einen Detektionsschaltkreis für eine Differenzstrom-Detektionsvorrichtung mit einem konstant vormagnetisierten Magnetkern, wobei der Magnetkern eine DC-Vormagnetisierungswicklung und eine Messwicklung aufweisen kann.

Der Artikel von DU, Y. et al.: "Review of non-isolated be-directional DC-DC converters for plug-in hybrid electric vehicle charge station application at municipal parking decks", 2010 Twenty-Fifth Annual IEEE Applied Power Electronics Conference and Exposition (APEC), Palm Springs, CA 21.-25.02.2010 (IEEE Xplore: 18.03.2010, S. 1145-1151) beschreibt und vergleicht den Einsatz von bidirektionalen DC-DC Konvertern für eine Ladestation zur Aufladung von Plug-in-Hybrid Elektrofahrzeugen. Dazu wird aus einem dreiphasigen Stromversorgungssystem zunächst mittels eines dreiphasigen AC-DC Konverters ein Hochvolt-Gleichspannungssignal zur Verteilung über einen DC-Bus erzeugt. Über den bidirektionalen DC-DC Konverter wird die Hochvolt-Gleichspannung in eine niedrigere Gleichspannung umgesetzt, mit der die Batterie des Elektrofahrzeugs geladen wird, wobei zwischen die Batterie und den DC-DC Konverter ein "ground fault interrupter" (GFI) geschaltet ist.

Aus dem Wikipedia-Beitrag "Fehlerstrom-Schutzschalter" ist ein allstromsensitiver Fehlerstrom-Schutzschalter Typ B bekannt, welcher neben Wechselfehlerströmen auch glatte Gleichfehlerströme erfasst.

### Offenbarung der Erfindung

Zur Überwindung der vorgenannten Probleme aus dem Stand der Technik definiert die Erfindung die Merkmale des unabhängigen Anspruchs.

Es wird vorgeschlagen, dass die Differenzstrom-Überwachungseinrichtung zumindest zur Erkennung einer Gleichstromdifferenz Δ*I* ausgelegt ist und ein oder mehrere, insbesondere kaskadierte Abschaltelemente umfassen, die bei einer Überschreitung einer vorbestimmbaren Gleichstromabschaltdifferenz über eine vorbestimmbare Abschaltzeit eine Unterbrechung des Aufladevorgangs bewirken können. Mit anderen Worten betrifft die Erfindung eine Stromtankstelle, die eine Gleichrichtereinrichtung umfasst, um die aus einem Versorgungsspannungsnetz bezogene Wechselspannung in eine Gleichspannung umzurichten und zur Aufladung eines Energiespeichers eines Fahrzeugs, insbesondere eines Akkumulators, bereit zu stellen. Das Elektrofahrzeug wird mittels einer Kontaktierungseinrichtung, beispielsweise einem Anschlusskabel der Stromaufladevorrichtung oder mittels eines Verbindungskabels, die in eine Buchse der Stromaufladevorrichtung einsteckbar ist, mit einer Steckerbuchse eines Fahrzeugs verbunden, so dass die extern erzeugte Auflade-Gleichspannung an das Elektrofahrzeug geliefert werden kann.

Zum verbesserten Schutz bei indirektem Berühren und gegen Fehlerströme umfasst die Stromaufladevorrichtung eine Differenzstrom-Überwachungseinrichtung, die ausgelegt ist eine Gleichstromdifferenz Δ*I* zu detektieren, wobei bei Überschreitung einer vorbestimmbaren Gleichstromabschaltdifferenz über einen vorbestimmten Abschaltzeitraum eine Unterbrechung des Aufladevorgangs bewirkt wird, wobei die Differenzstrom-Überwachungseinrichtung zumindest die Summe des hinlaufenden Stroms *I₁* gegenüber dem rücklaufenden Strom *I₂* vergleicht und daraus eine Gleichstromdifferenz Δ*I* bestimmt. Überschreitet die Gleichstromdifferenz Δ*I* eine vorbestimmbare Gleichstromabschaltdifferenz Δ*I* ₘₐₓ und wird diese vorbestimmbare Gleichstromabschaltdifferenz über einen vorbestimmbaren Abschaltzeitraum Δ *T* überschritten, so wird eine Unterbrechung des Aufladevorgangs vorgenommen. Somit kann bei Bereitstellung einer externen Gleichspannung an einer Stromaufladevorrichtung und Auftreten eines Fehlerstroms ein zuverlässiges Abschalten des Aufladevorgangs sichergestellt werden, so dass zum einen keine Fehlerströme fließen, zum anderen keine ungewollten Spannungspotentiale auftreten, die bei Berühren durch eine Person ein Gefährdungsrisiko darstellen können. Somit können für den Menschen gefährliche Fehlerströme zuverlässig erkannt werden, die durch eine übliche Fehlerstromschutzeinrichtung (RCD) des Typs A (Wechselstromdifferenzfehler) nicht erkennbar sind. Die Stromaufladevorrichtung ist somit in der Lage, ein sicheres, d.h. ungefährliches Aufladen eines Elektrofahrzeuges zu überwachen und kann beispielsweise in einer bereits vorhandenen öffentlichen Stromtanksäule nachträglich integriert werden, um erforderliche Sicherheitsstandards einzuhalten bzw. zu übertreffen. Die Differenzstrom-Überwachungseinrichtung ist in der Lage, sowohl Fehlerströme in dem speisenden Ladesystem, als auch in dem angeschlossenen Elektrofahrzeug und auch im Ladekabel zwischen Stromauswertevorrichtung und Elektrofahrzeug zu erkennen und mit vorgegebenen Abschaltströmen und Abschaltzeiten für eine Gleichstromdifferenz eine zuverlässige Unterbrechung des Ladevorgangs zu bewirken.

Die Kontaktierungseinrichtung umfasst einen Datenkommunikationskanal, um Daten zwischen Fahrzeug und Stromaufladevorrichtung zu übertragen. Mittels eines solchen Datenkommunikationskanals können beispielsweise energiespeicherspezifische Aufladedaten wie Nennspannung, Nennaufladestrom, Aufladekapazität oder Typ des Energiespeichers übertragen werden, um eine in der Stromaufladevorrichtung umfasste Ladereglereinrichtung entsprechend den aufzuladenden Energiespeichern einzustellen. Daneben können weitere Daten, wie beispielsweise durchschnittlicher Energieverbrauch, Zustand des Fahrzeugs oder ähnliches an die Stromaufladevorrichtung übermittelt werden, die beispielsweise angeschlossen an ein Datenkommunikationsnetzwerk wie Internet, die übermittelten Daten an einen zentralseitigen Server abgeben kann.

Der Datenkommunikationskanal stellt einen Datenaustausch zwischen einer Isolationsüberwachungseinrichtung des Fahrzeugs und der Differenzstrom- Überwachungseinrichtung bereit und liest zur Vorbestimmung einer Stromabschaltdifferenz und/oder einer Abschaltzeit zumindest einen Isolationswiderstand aus. In der Regel sind in Elektrofahrzeugen Isolationsüberwachungseinrichtungen installiert, die permanent oder periodisch den Isolationszustand des elektrischen Netzwerkes gegenüber dem Fahrzeugchassis, d.h. der Fahrzeugmasse überprüfen. Die Isolationsüberwachungseinrichtungen überprüfen üblicherweise kontinuierlich mittels überlagerten Pulsspannungen, Wechselspannungen oder Gleichspannungen gemäß von aus dem Stand der Technik bekannten Isolationsüberwachungsverfahren den Isolationszustand des Bordnetzes und sind unverzichtbarer Bestandteil für die Sicherheit in einem Elektrofahrzeug. Durch Austausch von Daten der Isolationsüberwachungseinrichtung mit der Differenzstrom-Überwachungseinrichtung der Stromaufladevorrichtung wird ein Isolationswiderstand *R_{F}* des Fahrzeugs ausgelesen, der verwendet wird, um Stromabschaltdifferenzen und Stromabschaltzeiten der Differenzstrom-Überwachungseinrichtung so einzustellen, dass ein unterbrechungsfreier und sicherer Aufladevorgang durchgeführt werden kann. Beispielsweise kann bei einem Fahrzeug, das über einen hohen Isolationswiderstand *R_{F}* verfügt, niedrige Stromabschaltdifferenzen und kurze Stromabschaltzeiten eingestellt werden und bei Fahrzeugen, die über einen niedrigen Isolationswiderstand *R_{F}* verfügen und entsprechende Fehlerströme aufweisen, hohe Stromabschaltdifferenzen und lange Stromabschaltzeiten berücksichtigt werden, um den Ladevorgang zuverlässig durchzuführen.

Gemäß einer günstigen Weiterbildung der Erfindung ist die Differenzstrom-Überwachungseinrichtung als allstromsensitive Differenzstrom-Überwachungseinrichtung ausgebildet und eingerichtet, sowohl eine Gleichstromabschaltdifferenz, eine Wechselstromabschaltdifferenz und eine Pulsstromabschaltdifferenz zu erkennen, wobei das Abschaltelement eingerichtet ist, bei Überschreitung einer vorbestimmbaren Gleich-, Wechsel- oder Pulsstromabschaltdifferenz über eine vorbestimmbare Gleich-, Wechsel- oder Pulsstromabschaltzeit eine Unterbrechung des Aufladevorgangs zu bewirken. Somit schlägt diese Weiterentwicklung die Verwendung einer allstromsensitiven Differenzstrom-Überwachungseinrichtung, die beispielsweise einem allstromsensitiven Fehlerstromschutzeinrichtungen nachgebildet ist, vor, die sowohl Gleich-, Wechsel- als auch gemischte Ströme bzw. Pulsströme überwachen kann und bei Überschreiten einer jeweils spezifischen Stromabschaltdifferenz über eine vorbestimmbare spezifische Stromabschaltzeit eine Unterbrechung des Ladevorgangs zu bewirken. Dabei ist es vorteilhaft denkbar, dass die Stromabschaltdifferenz für eine Gleichstrom-, Wechselstrom- oder eine Pulsstromdifferenz unterschiedlich ausgelegt sein kann, entsprechend können auch die Abschaltzeiten für die verschiedenen Stromarten unterschiedlich gewählt sein. So sind Gleichspannungen für den Menschen wesentlich ungefährlicher als Wechselspannungen, so dass bei Erhöhung der Sicherheit bei indirektem Berühren jedoch zur Gewährleistung eines zuverlässigen Ladevorgangs die Gleichstromabschaltdifferenz größer als die Wechselstromabschaltdifferenz oder als eine Pulsstromabschaltdifferenz gewählt werden kann. Dementsprechend kann eine Gleichstromabschaltdifferenz größer als eine Pulsstromabschaltdifferenz, und diese größer als eine Wechselstromabschaltdifferenz gewählt werden, entsprechendes gilt für die Abschaltzeiten. Somit können die zu überwachenden Abschaltzeiten unterschiedlich lang gewählt werden, um einen verbesserten Schutz bei indirektem Berühren und gegen Schädigung oder Zerstörung der Kraftfahrzeugelektronik zu gewährleisten.

Aufbauend auf dem vorgenannten Ausführungsbeispiel kann in einer weiteren günstigen Weiterbildung die Gleich-, Wechsel- und Pulsstromabschaltdifferenz einen im Wesentlichen gleichen Effektivbetragswert besitzen und die Gleich-, Wechsel- und Pulsstromabschaltzeit im Wesentlichen gleiche Zeitspannen sein. Durch die Wahl gleich hoher Abschaltdifferenzen Δ*I* in gleichlangen Beobachtungszeitspannen kann eine Vereinfachung der inneren Struktur der Differenzstrom-Überwachungseinrichtung erreicht werden, wobei die Stromabschaltdifferenz und die Stromabschaltzeit so gewählt werden müssen, dass bei jeglicher Stromart ein zuverlässiger Personenschutz gegeben und ein zuverlässiges Aufladen ermöglicht werden kann. Die im Inneren der Differenzstrom-Überwachungseinrichtung befindliche Messelektronik kann somit Wechsel-, Gleich- oder gemischte Filterströme detektieren und kann bei Ansteuerung des Abschaltelements mit gleichen Ansprechwerten für alle Fehlerarten den Aufladevorgang unterbrechen.

Gemäß einer günstigen Weiterentwicklung der Erfindung kann die Stromaufladevorrichtung eine Ladereglereinrichtung umfassen, die einen energiespeicherspezifischen Aufladevorgang regeln kann. Somit kann die gesamte Aufladeregelelektronik in der Stromaufladevorrichtung umfasst sein, so dass die Elektrofahrzeuge lediglich einen Gleichspannungsanschluss aufweisen muss, der im Wesentlichen die Stromaufladevorrichtung unmittelbar mit dem Energiespeicher des Elektrofahrzeugs verbindet. Dies spart Gewicht und Herstellkosten des Elektrofahrzeugs und ermöglicht die Auslegung der Stromaufladevorrichtung mit hochwertigen, langlebigen und leistungsstarken Komponenten, die eine zuverlässige Schnellaufladung des Energiespeichers ermöglichen.

Zur Bereitstellung einer energiespeicherspezifischen Aufladeregelung müssen Daten des Energiespeichers an die Stromaufladevorrichtung übergeben werden. Dies kann beispielsweise manuell durch Eingabe eines Zahlencodes oder Dateneingabe eingestellt werden, jedoch ist alternativ oder zusätzlich eine automatische Übertragung energiespeicherspezifischer Daten denkbar.

Gemäß einer vorteilhaften Weiterbildung der Erfindung kann die Kontaktierungseinrichtung als Datenkommunikationskanal insbesondere eine Powerline-Verbindung oder eine serielle Datenleitungsverbindung umfassen, um Daten zwischen Fahrzeug und Stromaufladevorrichtung zu übertragen. Durch eine Powerline-Datenübertragung können die stromführenden DC-Aufladeleitungen zur Datenübertragung genutzt werden, so dass auf spezielle Datenkommunikationsleitungen oder speziell ausgerüstete Kontaktierungseinrichtungen verzichtet werden kann. Davon unabhängig kann einer oder können mehrere serielle Datenleitungsverbindungen in der Kontaktierungseinrichtung vorgesehen sein, um Daten zwischen Elektrofahrzeug und Stromaufladevorrichtung zu übertragen.

Aufbauend auf den beiden vorgenannten vorteilhaften Weiterbildungen kann gemäß einer weiteren günstigen Ausführung der Datenkommunikationskanal ein Datenaustausch zwischen einer Energiespeicherkontrollvorrichtung des Elektrofahrzeugs und der Ladereglereinrichtung bereitstellen und insbesondere zur Regelung des Aufladevorgangs relevante Energiespeicherdaten wie Ladespannung, Ladestrom, Ladekapazität oder vergleichbares an die Ladereglereinrichtung der Stromaufladevorrichtung übermitteln. So kann bei Integration einer Ladereglereinrichtung einer Stromaufladevorrichtung automatisch energiespeicherspezifische Daten, die von der Ladereglereinrichtung zur Aufladung berücksichtigt werden müssen, von einer Energiespeicherkontrollvorrichtung ausgelesen werden, um die Ladereglereinrichtung derart einzustellen, um einen optimalen Ladestrom zur Schnellaufladung des Energiespeichers bereit zu stellen. Des Weiteren ist denkbar, dass die Energiespeicherkontrollvorrichtung weitere Daten, wie Kapazität des Energiespeichers, Alter des Energiespeichers, Wartungsbedarf oder weitere Kontroll- und Messdaten an die Stromaufladevorrichtung weitergibt, um zum einen den Ladevorgang günstig zu beeinflusse, zum anderen Warn- oder Störmeldungen an den Benutzer oder über ein Netzwerk an einen Server auszugeben.

Gemäß einer weiteren günstigen Fortbildung der Erfindung kann die Differenzstrom-Überwachungseinrichtung unipolar eingerichtet sein und sowohl eine Stromdifferenz in Stromrichtung von Stromladeeinrichtung zum Elektrofahrzeug, als auch eine Stromdifferenz in Stromrichtung vom Elektrofahrzeug zur Stromladeeinrichtung erkennen. Eine solche unipolare Differenzstrom-Überwachung ist insbesondere dann sinnvoll, wenn die Batterieenergie des Fahrzeugs zur Einspeisung in ein Versorgungsnetz abgegeben werden kann. So kann bei einer größeren Anzahl einspeisender Fahrzeuge insbesondere ein Lastausgleich bei großen Versorgungsnetzen erreicht werden. Diesbezüglich ist eine solche Einspeisung insbesondere bei Fahrzeugen denkbar, die über eigene energieproduzierende Mittel, beispielsweise Solarzellen oder Bremsenergierückgewinnungsgeneratoren verfügen, die intern einen Energiespeicher aufladen können, wobei überschüssige Energie an die Stromaufladevorrichtung und somit an das Versorgungsnetz zurückgeliefert werden kann. Daneben sind fahrbare Notstromaggregate oder "Stromtanker" mit einer entsprechend hohen Stromladekapazität denkbar, die Energie in isolierte Versorgungsnetze einspeisen können, beispielsweise Versorgungsnetze, die sich im Normalbetrieb auf eine nicht durchgängig verfügbare Energieerzeugung wie Windenergie oder Photovoltaik stützen. In diesem Fall kann in beide mögliche Stromrichtungen - zum einen zum Aufladen des Elektrofahrzeugs zum anderen zur Abgabe von überschüssiger Energie an die Stromaufladevorrichtung - eine Überwachung der Differenzströme vorgenommen werden. Schaltungstechnisch ist dabei zu berücksichtigen, dass die Differenzstrom-Überwachungseinrichtung zumindest teilweise mit Energie versorgt werden muss, um ihre Aufgaben zu erfüllen, so dass in diesem Fall möglicherweise vor und hinter dem Abschaltelement Stromabgriffe zur Versorgung der Differenzstrom- Überwachungseinrichtung vorgesehen werden müssten.

Gemäß einer weiteren vorteilhaften Ausbildung der Erfindung kann die Kontaktierungseinrichtung eine Schutzleiterverbindung umfassen, die eine Potentialverbindung zwischen Masse der Stromaufladevorrichtung und Fahrzeugmasse herstellen kann, und die Differenzstrom- Überwachungseinrichtung kann eine Kontaktierungsfehlereinheit zur Feststellung eines Kontaktierungsfehlers, eines Kurzschlussfehlers und/oder eines Überprüfungsfehlers umfassen, die bei Fehlerfeststellung das Abschaltelement zur Unterbrechung des Aufladevorgangs aktivieren kann. Somit schlägt diese Weiterbildung vor, dass mittels der Kontaktierungseinrichtung, beispielsweise mittels eines Aufladekabels mit Stecker und Buchse oder eines Ladekabels, das fest an die Stromaufladevorrichtung und/oder dem Elektrofahrzeug angebracht ist, eine Potentialverbindung zwischen der Bezugsmasse der Stromaufladevorrichtung und der Bezugsmasse des Fahrzeugs hergestellt werden kann, so dass in diesem Fall ein Fehlerstrom zwischen Stromaufladevorrichtung und Fahrzeug fließen kann. Die Kontaktierungsfehlereinheit überwacht zum einen den polrichtigen Anschluss der Kontaktierungseinrichtung, so dass eine verpolsichere Verbindung hergestellt wird, und kann zum anderen einen Kurzschlussfehler, zum Beispiel bei Kurzschluss zwischen Masse und einem oder beiden stromführenden Leitern oder einen Kontaktierungsfehler beispielsweise bei schlechter Verbindung der Masseleitung oder schlechter Verbindung eines stromführenden Leiters ausgeben und das Abschaltelement aktivieren, so dass der Aufladevorgang unterbrochen werden kann. Hierdurch wird die elektrische Sicherheit erheblich erhöht, da zusätzlich zur Überwachung eines Differenzfehlers durch die Differenzstrom-Überwachungseinrichtung in der Stromaufladevorrichtung eine Kontaktierungsfehlereinheit vorgesehen ist, die im Falle eines Verpolungsfehlers, eines Kurzschlusses oder eines Kontaktfehlers eine Abschaltung des Aufladevorgangs bewirken kann.

Gemäß einer weiteren vorteilhaften Ausgestaltung kann die Stromaufladevorrichtung eine Fahrzeugtesteinrichtung umfassen, die eine selektive Aktivierung von elektrischen Fahrzeugkomponenten bei Überwachung einer Stromdifferenz vornehmen kann, um die Funktion und den Status der fahrzeuginternen Isolationsüberwachungseinrichtung zu überprüfen. So kann die Fahrzeugtesteinrichtung über den Datenkommunikationskanal die im Fahrzeug befindliche Isolationsüberwachungseinrichtung ansteuern, um deren Funktion zu überprüfen und/oder über die Isolationsüberwachungseinrichtung wesentliche elektrische Bauteile des Fahrzeugs zu aktivieren, um einen Selbsttest bevorzugt hinsichtlich der Isolationsfestigkeit, dem Auftreten von Fehlerströmen, Kurzschlüssen oder Kontaktschwierigkeiten durchzuführen. Dabei ist es denkbar, dass die Fahrzeugtesteinrichtung zumindest die Isolationsüberwachungseinrichtung zum Auslesen von sicherheitsrelevanten Daten kontaktiert und/oder weitere elektrische Betriebsmittel und Sicherheitseinrichtungen des Fahrzeugs auslesen bzw. zu Testzwecken aktivieren kann, um den elektrischen Zustand des Fahrzeugbordnetzes zu überprüfen. Im Falle des Empfangs oder Erkennens von Störungsmeldungen durch die Fahrzeugtesteinrichtung kann es weiterhin möglich sein, eine Abschaltung des Aufladevorgangs zu bewirken, um eine Personengefährdung auszuschließen und weitere Schädigungen an der Fahrzeugelektronik oder Stromaufladevorrichtung zu verhindern. Hierdurch nutzt die Stromaufladevorrichtung bereits im Fahrzeug befindliche Überwachungs- und Testvorrichtungen zur Überprüfung des elektrischen Zustands, wodurch der Personen- und Fahrzeugschutz weiter erhöht und ein gefahrloses zuverlässiges Aufladen des Elektrofahrzeugs ermöglicht wird.

Gemäß einer günstigen Weiterbildung der Erfindung kann die Differenzstrom-Überwachungseinrichtung einen Summenstromwandler zur Detektion einer Gleich-, Wechsel- und Pulsstromdifferenz und/oder einer Überstromüberwachungseinrichtung zur Begrenzung eines Aufladestroms umfassen. Die Differenzstrom-Überwachungseinrichtung muss zur Bestimmung von Differenzströmen zumindest den Strom in einem hinlaufenden und den Strom in einem rücklaufenden Pfad eines Aufladestromkreises messen. Hierbei bieten sich verschiedene konventionelle Strommessmöglichkeiten an. Beispielsweise können Widerstände in den Strompfad eingeschaltet und der Spannungsabfall gemessen werden. Eine exakte Bestimmung erfolgt allerdings über ein induktives Wandlersystem, das einen indirekt messenden Summenstromwandler, der die Summe der hin- und rücklaufenden Ströme durch Bestimmung eines die Stromleiter umgebenden Magnetfelds messen kann, umfasst, wobei der Summenstromwandler so ausgelegt ist, dass er sowohl Gleich-, Wechsel- und Pulsstromdifferenzen messen kann. Solche Summenstromwandler sind beim Einsatz in Fehlerstromschutzeinrichtungen (RCDs) bereits Stand der Technik und können vorteilhaft in einer Stromaufladevorrichtung eingesetzt werden.

Aufbauend auf dem vorangegangenen Ausführungsbeispiel kann es weiterhin vorteilhaft sein, dass die Differenzstrom-Überwachungseinrichtung zur Detektion einer Stromdifferenz ein Summenstromwandler umfassend zwei Messeinwicklungen gleicher Windungszahl, einen Gegentaktoszillator, eine Oszillator-Steuereinheit, eine Kompensationsstrom-Filtereinrichtung und eine Differenzstrom-Analyseeinheit umfasst. Die Messeinwicklungen können als Schwingungsinduktivitäten des Gegentaktoszillators geschaltet sein und der Gegentaktoszillator kann mittels eines durch die Oszillator-Steuereinheit erzeugbaren Kompensationsstroms eine B-H-Kennlinie (Flussdichte/Feldstärkekennlinie/Hysteresekennlinie) eines Jochs des Summenstromwandlers gleichmäßig durchfahren, wobei der Kompensationsstrom durch die Kompensationsstrom-Filtereinrichtung in einen Gleichstromdifferenzanteil und einen Wechselstromdifferenzanteil aufteilbar ist, und von der Differenzstrom-Analyseeinheit auf Überschreitung einer vorbestimmbaren Gleichstrom- und/oder Wechselstromabschaltdifferenz über eine vorbestimmbare Abschaltzeit überwacht werden kann. Bei Überschreiten der Stromabschaltdifferenz während einer vorbestimmbaren Abschaltzeit kann die Differenzstrom-Analyseeinheit das Abschaltelement zur Unterbrechung des Aufladevorgangs aktivieren, wobei das Abschaltelement die Gleichstromzuführung zum Fahrzeug unterbricht. Demzufolge arbeitet die Differenzstrom-Überwachungseinrichtung nach dem Prinzip einer magnetischen Kompensation, die zur Erfassung von Gleich-, Wechsel- und Mischströmen geeignet ist. Die auf dem Summenstromwandler befindlichen zwei Wicklungen gleicher Windungszahl N sind als Induktivitäten zur Schwingungserzeugung in den Schwingkreis des Gegentaktoszillators eingeschaltet. Durch die Schwingung des Gegentaktoszillators wird die Kennlinie des Jochs des Summenstromwandlers ständig bis in den Sättigungsbereich durchlaufen. Dadurch werden Gleichstrommagnetisierungen kompensiert. Zur Steuerung des Gegentaktoszillators erzeugt eine Oszillator-Steuereinheit einen Kompensationsstrom, der unmittelbar durch den AC- und DC-Anteil der Stromdifferenz proportional beeinflusst wird. Dieser Kompensationsstrom kann elektronisch durch eine Kompensationsstrom-Filtereinrichtung nach Stromart getrennt und ausgewertet werden, wobei die Differenzstrom-Analyseeinheit bei Überschreitung eines vorbestimmbaren Wertes einer Stromdifferenz beispielsweise je nach Stromart (Gleichstromdifferenz, Pulsstromdifferenz, Wechselstromdifferenz oder Differenzen gemischter Stromarten) oder einer absoluten Stromdifferenz für alle Stromarten ein Auslösen des Abschaltelements bewirken kann, so dass der Aufladevorgang unterbrochen wird. Somit kann, ausgehend von dem Prinzip bekannter Fehlerstromschutzeinrichtungen (RCD) eine Differenzstrom-Überwachungseinrichtung vorgeschlagen werden, die ein personenschützendes und zuverlässiges Aufladeverfahren für ein Elektrofahrzeug bereitstellen kann.

### Figurenbeschreibung

Weitere Vorteile ergeben sich aus der folgenden Zeichnungsbeschreibung. In der Zeichnung sind Ausführungsbeispiele der Erfindung dargestellt. Die Zeichnungen, die Beschreibung und die Ansprüche enthalten zahlreiche Merkmale und Kombinationen. Der Fachmann wird die Merkmale zweckmäßigerweise auch einzeln betrachten und zur sinnvollen weiteren Kombination zusammenfassen.

Es zeigen beispielhaft:
- **Fig. 1:**: eine schematische Darstellung eines ersten Ausführungsbeispiels einer Stromaufladevorrichtung mit angeschlossenem Elektrofahrzeug;
- **Fig. 2:**: schematisch ein Blockschaltbild einer Differenzstrom-Überwachungseinrichtung eines Ausführungsbeispiels einer erfindungsgemäßen Stromaufladevorrichtung;
- **Fig. 3:**: ein Blockschaltbild einer weiteren Differenzstrom-Überwachungseinrichtung für eine erfindungsgemäße Stromaufladevorrichtung;
- **Fig. 4:**: eine idealisierte Hysteresekennlinie eines Summentromwandlerjochs;
- **Fig. 5:**: ein Blockschaltbild eines weiteren Ausführungsbeispiels einer Stromaufladevorrichtung mit angeschlossenem Elektrofahrzeug;
- **Fig. 6:**: ein Blockschaltbild eines weiteren Ausführungsbeispiels einer Stromaufladevorrichtung mit angeschlossenem Elektrofahrzeug.

### Ausführungsformen der Erfindung

In den Figuren sind gleiche oder gleichartige Komponenten mit gleichen Bezugszeichen beziffert.

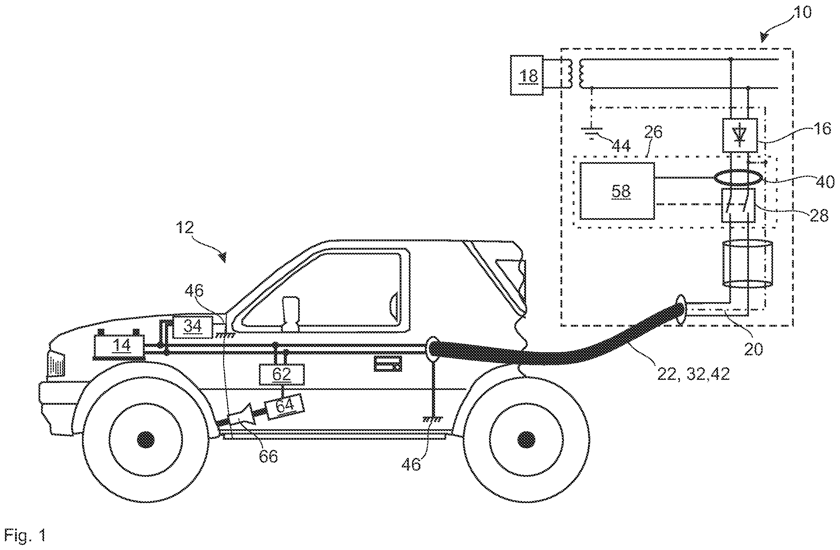

Fig. 1 zeigt schematisch ein erstes Ausführungsbeispiel einer Stromaufladevorrichtung 10, die zum Aufladen eines Energiespeichers 14, in diesem Fall einer Akkumulatorbatterie eines Elektrofahrzeugs 12 verbunden ist. Die Stromaufladevorrichtung 10 ist mittels einer Kontaktierungseinrichtung 22, die ein Verbindungskabel umfasst und auf Seiten der Stromaufladevorrichtung 10 einen Steckverbindungsanschluss und auf Seiten des Elektrofahrzeugs 12 einen Buchsenverbindungsanschluss kontaktiert, verbunden. Die Kontaktierungseinrichtung 22 umfasst des Weiteren einen Datenkommunikationskanal, der mittels eines PWMmodulierten Signals Daten auf einen stromführenden Leiter zur Aufladung des Energiespeichers 14 moduliert. Des Weiteren umfasst die Kontaktierungseinrichtung 22 eine Schutzleiterverbindung 42, die die Masse 44 der Stromaufladevorrichtung mit der Fahrzeugmasse 46, die durch das Fahrzeugchassis gebildet wird, zur Herstellung eines Potentialausgleichs verbindet.

Im Elektrofahrzeug 12 ist die Kontaktierungseinrichtung 22 unmittelbar an den Energiespeicher 14 zur Aufladung angeschlossen, wobei die beiden stromführenden Leiter 14 mittels einer Isolationsüberwachungseinrichtung 34, die ebenfalls mit der Fahrzeugmasse 46 verbunden ist, in Bezug auf einen Isolationswiderstand gegenüber Masse durchgängig überwacht werden. Treten Isolationsfehler gegenüber Masse 46 auf, so kann die Isolationsüberwachungseinrichtung 34 eine Warnung anzeigen und bei vorgegebenen Isolationswiderständen eine Abschaltung des Energiespeichers 14 bewirken. An den stromführenden Leitern des Bordnetzes ist des Weiteren ein Inverter 62 mit angeschlossenem Elektromotor 64 zur Erzeugung einer Antriebskraft des Fahrzeugs angeschlossen, wobei der Elektromotor 64 über ein mechanisches Getriebe 66 die Räder des Fahrzeugs 12 antreiben kann.

Die Stromaufladevorrichtung 10 ist an ein Energieversorgungsspannungsnetz 18 mittels eines Transformators angekoppelt und weist auf der Sekundärseite des Transformators eine Masseverbindung 44 zum Gehäuse der Stromaufladevorrichtung 10 auf, an die auch eine Potentialausgleichsleitung der Auflade-Gleichspannung 20 angeschlossen ist. Die Stromaufladevorrichtung 10 umfasst eine Differenzstrom-Überwachungseinrichtung 26, die ein Abschaltelement 28, einen Summenstromwandler 40 und eine Differenzstrom-Analyseeinheit 58 umfasst. Das Abschaltelement 28 kann beispielsweise ein Abschaltschütz sein, aber auch ein kaskadiertes zwei- oder mehrstufiges Abschaltelement sein, dass beispielsweise ein Überstromabschaltmittel wie z.B. thermische Abschaltkontakte wie Biegemetallauslöser oder elektromagnetische Abschaltkontakte für Überstrom sowie einen Abschaltschütz zur Trennung bei hohen Differenzströmen umfassen kann, aber auch zur Erhöhung der Abschaltsicherheit bei hohen Strömen zwei oder mehrere Abschaltschütze in Reihe umfassen kann. Die Transformatorwechselspannung wird mittels einer Gleichrichtereinrichtung 16, beispielsweise einer Brückengleichrichterschaltung oder einem elektronischen Netzteil in die Auflade-Gleichspannung 20 umgewandelt und über das Abschaltelement 28 an die Kontaktierungseinrichtung 22 zur Aufladung des Fahrzeugs 12 weitergeleitet. Im Aufladebetrieb sind die allpoligen Schaltkontakte des Abschaltelements 28 geschlossen. Eingangsseitig zum Abschaltelement 28 ist der Summenstromwandler 40 angeordnet, der die Summe der hin- und rücklaufenden Ströme *I*₁, *I*₂ zur Aufladung des Energiespeichers 14 des Fahrzeugs 12 vergleicht und daraus eine Stromdifferenz Δ*I* ableitet, die mittels der Differenzstrom-Analyseeinheit 58 überwacht wird. Hierzu ist die Differenzstrom-Überwachungseinrichtung 26 derart ausgestaltet, dass Gleichstromdifferenzen, Wechselstromdifferenzen und von gleichstromüberlagerten Wechselstromdifferenzen auf Überschreiten einer Stromabschaltdifferenz überwacht werden können und bei Überschreiten einer Stromabschaltdifferenz über eine vorbestimmte Abschaltzeit eine Abschaltung des Abschaltelements 28 erfolgen kann, so dass der Ladevorgang unterbrochen wird. Hierzu umfasst die Differenzstrom-Analyseeinheit 58 der Differenzstrom-Überwachungseinrichtung 26 sowohl konventionelle elektromechanische Bauteile, als auch elektronische aktive Bauelemente, die zur Bestimmung einer Gleichspannungsdifferenz herangezogen werden können. Dabei kann es möglich sein, dass zum Betrieb der Differenzstrom-Überwachungseinrichtung 26 eine DC-Energieversorgung bereitgestellt werden muss, um eine Überwachung zumindest der Gleichstromdifferenz Δ*I* sicherzustellen.

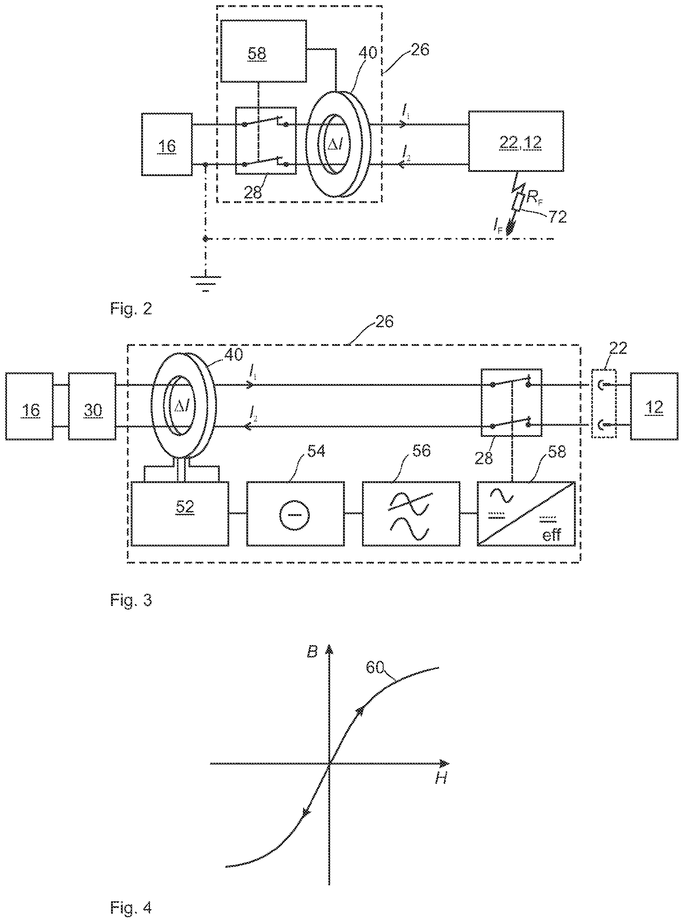

Fig. 2 zeigt in einem Blockschaltbild die interne Struktur eines Ausführungsbeispiels einer Differenzstrom-Überwachungseinrichtung 26, die in einer erfindungsgemäßen Stromaufladevorrichtung 10 einsetzbar ist. Die Differenzstrom-Überwachungseinrichtung 26 ist unmittelbar hinter einer Gleichrichtereinrichtung 16 in eine Stromaufladevorrichtung 10 geschaltet und überwacht die Differenz eines hinlaufenden Stroms *I₁* und eines rücklaufenden Stroms *I₂*, die über eine Kontaktierungseinrichtung 22 zu einem Elektrofahrzeug 12 mit integrierter Ladereglereinrichtung fließt. Die Differenz zwischen hinlaufendem Strom *I₁* und rücklaufendem Strom *I₂* wird als Δ*I* bezeichnet und kann mittels eines Summenstromwandlers 40 aufgenommen werden, woraus eine Differenzstrom-Analyseeinheit 58 eine Stromdifferenz Δ*I* bestimmen kann. Überschreitet der Effektivwert der Stromdifferenz Δ*I* eine Stromabschaltdifferenz dauerhaft während einer vorbestimmten Abschaltzeit, so veranlasst die Differenzstrom-Analyseeinheit 58 das Abschaltelement 28 zum Abschalten der Gleichstromversorgung des Elektrofahrzeugs 12, so dass der Aufladevorgang unterbrochen wird. Tritt innerhalb der Kontaktierungseinrichtung 22, die die elektrische Verbindung zwischen Stromaufladevorrichtung 10 und Elektrofahrzeug 12 herstellt, oder innerhalb des Elektrofahrzeugs 12 ein Fehlerstrom *I_{F}* bedingt durch einen Isolationswiderstand *R_{F}* 72 auf, so ergibt sich eine Stromdifferenz Δ*I* zwischen *I₁* und *I₂*, die durch die Größe des Isolationswiderstands *R_{F}* und das Spannungsniveau der Aufladespannung gegenüber Masse bestimmt ist. Je nach Größe des Fehlerstroms *I_{F}* und damit Höhe der entstehenden Fehlerspannung variiert die Stromdifferenz Δ*I*, wobei bei einer gewissen Größe und vorbestimmbaren Abschaltzeit die Differenzstrom-Überwachungseinrichtung 26 ein Unterbrechen des Aufladevorgangs vornimmt, damit keine gefährlichen Berührspannung auftreten kann oder eine Beschädigung oder Zerstörung der Fahrzeugelektronik vermieden werden kann.

Fig. 3 zeigt in einem weiteren Blockschaltbild eine interne Struktur einer Differenzstrom-Überwachungseinrichtung 26, die zur Bestimmung sowohl von Gleichspannungs- sowie auch Wechselspannungs- und gemischten Stromdifferenzen ausgelegt ist. In diesem Fall ist die Differenzstrom-Überwachungseinrichtung 26 einer Stromaufladeeinrichtung 10 hinter einer Gleichrichtereinrichtung 16 und einer Ladereglereinrichtung 30 geschaltet, wobei die Ladereglereinrichtung 30 den Aufladestrom derart regelt, dass eine optimale Aufladung eines Energiespeichers 14 des Elektrofahrzeugs 12 sichergestellt wird. Der hinfließende Strom *I₁* ist über eine Kontaktierungseinrichtung 22, die über ein Steckerkupplungssystem die Stromaufladevorrichtung 10 mit dem Elektrofahrzeug 12 verbindet, mit dem Energiespeicher 14 des Elektrofahrzeugs 12 galvanisch verbunden. Der rückfließende Strom *I₂* durchfließt ebenfalls die Differenzstrom-Überwachungseinrichtung 26. Innerhalb der Differenzstrom-Überwachungseinrichtung 26 ist ein Summenstromwandler 40 angeordnet, der die Differenz der hinfließenden und rückfließenden Ströme *I₁*, *I₂* bestimmen kann und daraus eine Stromdifferenz Δ*I* bereitstellt. Zur Bestimmung von Gleichstrom- und Wechselstromdifferenzen umfasst der Summenstromumwandler 40 zwei Messwicklungen gleicher Windungszahl N, die über einen Gegentaktoszillator 52 angesteuert werden, wodurch eine magnetische Erregung im Joch des Summenstromwandlers 40 erzeugt wird, um die B-H-Hysteresekennlinie 60 (Flussdichte-Feldstärke-Kennlinie) des Summenstromwandlers 40 - idealisiert in Fig. 4 dargestellt - gleichmäßig zu durchfahren. Hierzu bildet jede Wicklung des Summenstromwandlers 40 ein induktives Element eines Schwingkreises des Gegentaktoszillators 52, wobei der Gegentaktoszillator 52 mittels einer Oszillator-Steuereinheit 54 angesteuert wird und einen Kompensationsstrom, der die symmetrische Durchfahrung der B-H-Kennlinie charakterisiert, extrahiert werden kann. Aus diesem Kompensationsstrom, der von der Oszillator-Steuereinheit 54 erzeugt wird, kann mittels einer Kompensationsstrom-Filtereinrichtung 56 ein Gleichstromdifferenzanteil Δ*I*₌ und ein Wechselstromdifferenzanteil Δ*I_{~}* extrahiert werden, die mittels einer Differenzstrom-Analyseeinheit 58 auf Überschreitung einer vorbestimmbaren Gleichstrom- und/oder Wechselstromabschaltdifferenz Δ*I_{MAX}*=, Δ*I_{MAX~}* über eine vorbestimmte Abschaltzeit Δ*T*₌, Δ*T_{~}* überwacht werden kann. Überschreitet der Effektivwert der Stromdifferenz Δ*I* die Stromabschaltdifferenz Δ*I_{MAX}* innerhalb des vorbestimmbaren Zeitintervalls Δ*T* dauerhaft, so aktiviert die Differenzstrom-Analyseeinheit 58 das Abschaltelement 28 zur Unterbrechung des Aufladevorgangs. Hierzu benötigt die Messelektronik 52, 54, 56 und 58 der Differenzstrom-Überwachungseinrichtung 26 eine interne Energieversorgung, die beispielsweise durch Abzweigung aus dem Gleichspannungskreis gewonnen werden kann, allerdings auch mittels einer Batterie bereitgestellt werden kann.

Fig. 4 zeigt idealisiert eine B-H-Flussdichte-/Feldstärke-Kennlinie eines verlustarmen Magnetisierungsjochs eines Summenstromwandlers 40, die idealisiert dargestellt ist und daher keine Hystereseverluste aufweist. Der Gegentaktoszillator 52 der Differenzstrom-Überwachungseinrichtung 26 der **Fig. 3** erzeugt eine Oszillatorschwingung, so dass die Kennlinie des Jochs mit der Schwingfrequenz bis in den Sättigungsbereich durchlaufen wird. Hierdurch werden Gleichstrommagnetisierungen kompensiert. Der durch den Oszillator 52 erzeugte Kompensationsstrom wird durch den AC- und den DC-Anteil des Differenzstroms proportional beeinflusst und kann elektronisch mittels der Oszillator-Steuereinheit 54, Kompensationsstrom-Filtereinrichtung 56 und Differenzstrom-Analyseeinheit 58 ausgewertet werden, um eine Stromdifferenz zu bestimmen. Im Gegensatz zu dem vorgenannten aktiven Summenstromwandler 40 arbeitet ein Typ A Summenstromwandler einer herkömmlichen Fehlerstromschutzeinrichtung (RCD) oder einer bekannten Differenzstrom- Überwachungseinrichtung (RCM) als Stromtransformator, der den Differenzstrom Δ*I* entsprechend der Windungszahl *N* übersetzt. An einem Messwiderstand *R_{B}* entsteht somit eine Messspannung *U_{M}* der Größe *U_{M}*=*R_{B}*ΔI*/*N.* Zur Erfassung von Gleichströmen oder Wechselströmen mit Gleichstromanteilen sind die vorgenannten aus dem Stand der Technik bekannten Fehlerstromschutzeinrichtungen (RCDs) Typ A ungeeignet, da deren Messwandler ausschließlich Wechselstromänderungen detektieren kann, und im Falle nur geringer zulässiger Gleichfehlerströme keinen Schutz bietet.

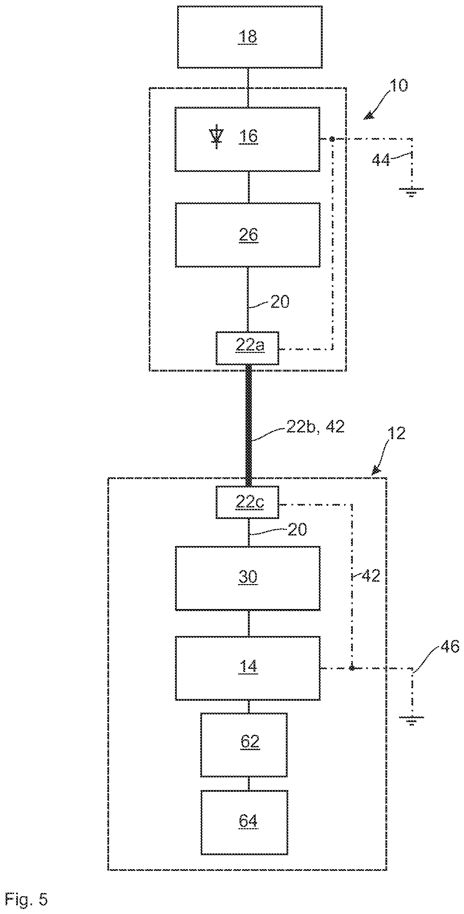

Fig. 5 zeigt ein Ausführungsbeispiel einer Stromaufladevorrichtung 10 in Blockdiagrammdarstellung, die an ein Elektrofahrzeug 12 angeschlossen ist. Die Stromaufladevorrichtung 10 ist an ein Versorgungsspannungsnetz 18 angeschlossen. Innerhalb der Stromaufladevorrichtung 10 ist eine Gleichrichtereinrichtung 16 umfasst, die aus der Wechselspannung des Versorgungsspannungsnetzes 18 eine Auflade-Gleichspannung 20 herstellt. Des Weiteren ist ein stromführender Leiter der aus der Gleichrichtereinrichtung 16 abgehenden Gleichspannung 20 gehäuseseitig mit einer Masse 44 der Stromaufladevorrichtung 10 verbunden, um eine Bezugsmasse herzustellen. Die Gleichspannung 20 der Gleichrichtereinrichtung 16 wird über eine Differenzstrom-Überwachungseinrichtung 26 geführt, die eine Stromdifferenz Δ*I* bestimmen kann und bei Überschreiten einer Stromabschaltdifferenz Δ*I*_{MAX} ein Abschalten des Aufladevorgangs vornehmen kann. Zur Versorgung des Elektrofahrzeugs 12 werden die aufladestromführenden Gleichstromleiter über eine Kontaktierungseinrichtung 22, die eine Buchse 22a, eine Verbindungsleitung 22b und eine Steckerbuchsenverbindung 22c umfasst und eine elektrische Verbindung zwischen Stromaufladevorrichtung 10 und Elektrofahrzeug 12 herstellt, geführt. Innerhalb des Elektrofahrzeugs 12 ist eine Ladereglereinrichtung 30 angeordnet, die abgestimmt auf die spezifischen Anforderungen des Energiespeichers 14 den Ladestrom- und den Ladespannungsverlauf regelt und eine Regenerationsladung sowie eine Schnellladung des Energiespeichers 14 vornehmen kann. Über die Kontaktierungseinrichtung 22 ist ebenfalls eine Schutzleiterverbindung 42 zwischen der Masse der Stromaufladevorrichtung 44 und der Fahrzeugmasse 46 hergestellt, um einen Potentialausgleich und ein gemeinsames Referenzpotential zu erzeugen. Die Ladereglereinrichtung 30 lädt die Energiespeicher 14 auf und der Energiespeicher 14 kann ein Elektromotor 64 über einen Inverter 62 mit elektrischer Energie versorgen, um ein Antrieb des Fahrzeugs 12 zu ermöglichen.

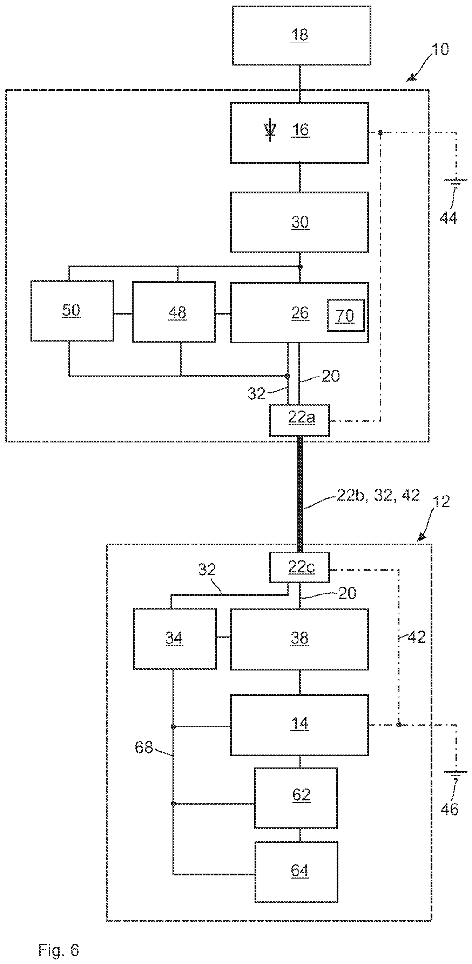

Fig. 6 zeigt schließlich ein weiteres Ausführungsbeispiel einer mit einem Elektrofahrzeug 12 verbundenen Stromaufladevorrichtung 10 in einem Blockdiagramm. Eingangsseitig ist die Stromaufladevorrichtung 10 mit einem Versorgungsspannungsnetz 18 verbunden, wobei der vom Versorgungsspannungsnetz 18 gelieferte Wechselstrom durch eine Gleichrichtereinrichtung 16 in Gleichstrom umgewandelt wird, und die Gleichrichtereinrichtung 16 eine Masse 44 der Stromaufladevorrichtung 10 durch Erdung eines stromführenden Leiters des Gleichspannungskreises 20 herstellt. Die Gleichspannungsleiter werden durch eine Ladereglereinrichtung 30 geführt, die bei Kenntnis über spezifische Eigenschaften des aufzuladenden Energiespeichers 14 einen entsprechenden Ladestrom und Ladespannung bereitstellt und beispielsweise eine gepulste Regenerationsladung oder rampenförmig gesteuerte Aufladung des Energiespeichers 14 des Elektrofahrzeugs 12 bereitstellen kann. Die stromführenden Leiter werden anschließend durch eine Differenzstrom-Überwachungseinrichtung 26 geführt, die eine entstehende Gleichstrom-, Wechselstrom- oder Pulsstromdifferenz Δ*I* detektieren kann und mit in einer Speichereinheit 70 abgelegten Werten für Stromabschaltdifferenzen Δ*I*_{MAX} über Stromabschaltzeiträume Δ*T* vergleichen kann, wonach eine Unterbrechung des Aufladevorgangs stattfindet, sofern die Stromdifferenzen Δ*I* die Abschaltdifferenzen Δ*I*_{MAX} dauerhaft über den Stromabschaltzeiträumen Δ*T* übersteigen. Parallel hierzu ist eine Kontaktierungsfehlereinheit 48 und eine Fahrzeugtesteinrichtung 50 innerhalb der Stromaufladevorrichtung 10 angeordnet, die ebenfalls in Kontakt mit der Differenzstrom-Überwachungseinrichtung 26 stehen und eine Abschaltung des Aufladevorgangs bewirken können. Die Kontaktierungsfehlereinheit 48 überwacht die Kontaktierungseinrichtung 22 und kann Kurzschlüsse, Verpolungen oder Kontaktierungsfehler beispielsweise bei hohen Übergangswiderständen feststellen, Warnsignale ausgeben und eine Abschaltung der Gleichstromversorgung 20 des Elektrofahrzeugs 12 bewirken. Daneben kann die Fahrzeugtesteinrichtung 50 eine Kommunikation über einen Datenkommunikationskanal 32, der von der Kontaktierungseinrichtung 22 hergestellt wird, mit einer Isolationsüberwachungseinrichtung 34 innerhalb des Fahrzeugs 12 herstellen, um den Isolationszustand des Fahrzeugnetzes zu überprüfen und einen Selbsttest wesentlicher elektrischer Aggregate des Fahrzeugs 12 durchzuführen. Hierzu verbindet die Kontaktierungseinrichtung 22 beispielsweise über ein Steckerkupplungssystem innerhalb der Stromaufladevorrichtung 10 durch ein Verbindungskabel 22b und ein Steckerkupplungssystem 22c auf Seiten des Elektrofahrzeugs 12 die Stromaufladevorrichtung 10 mit dem Bordnetz des Elektrofahrzeugs 12 galvanisch. Die Kontaktierungseinrichtung 22 überträgt sowohl den Aufladestrom der gleichspannungsführenden Leiter zur Aufladung des Energiespeichers 14 des Elektrofahrzeugs 12 als auch Daten über Verbindungsleitungen des Datenkommunikationskanals 32, beispielsweise über eine seriell arbeitende Datenleitung, oder über Powerline-codierte Hochfreuenzsignale, moduliert auf die stromführenden Gleichspannungsleitungen. Schließlich umfasst die Kontaktierungseinrichtung 22 eine Schutzleiterverbindung 42 zur Verbindung der Masse 44 der Stromaufladevorrichtung 10 mit der Fahrzeugmasse 46 des Elektrofahrzeugs 12.

Innerhalb des Elektrofahrzeugs 12 kontrolliert eine Energiespeicherkontrollvorrichtung 38 den Energiespeicher 14 und kann beispielsweise energiespezifische Daten, wie Aufladekapazität, Nennstromaufnahme sowie Aufladespannung des Energiespeichers 14 an die Stromaufladevorrichtung 10 zur Einstellung der Ladereglereinrichtung 30 übermitteln. Des Weiteren kann die Energiespeicherkontrollvorrichtung 38 weitere Daten, wie verbleibende Restkapazität des Energiespeichers 14, Wartungshinweise oder ähnliche Daten an die Stromaufladevorrichtung 10 übermitteln. Die Stromaufladevorrichtung 10 kann über ein Netzwerkanschluss an ein Datennetzwerk, beispielsweise Internet, angeschlossen sein, um Informationen über den eigenen Betriebszustand sowie über den Betriebszustand des jeweilig angeschlossenen Fahrzeugs an einen entfernten Server eines Fahrzeugherstellers oder einer Servicewerkstatt zu übermitteln. Der Datenkommunikationskanal 32 der Kontaktierungseinrichtung 22 ist mit einer Isolationsüberwachungseinrichtung 34 verbunden, um Daten der Isolationsüberwachungseinrichtung 34 oder Daten für einen Selbsttest wesentlicher Aggregate des Fahrzeugs an die Stromaufladevorrichtung 10 zu übermitteln. Hierzu ist die Isolationsüberwachungseinrichtung 34 mit elektrischen Aggregaten und Einrichtungen wie Energiespeicherkontrollvorrichtung 38, Energiespeicher 14, Inverter 62 und Elektromotor 64 verbunden, um deren Isolationswiderstand gegenüber der Fahrzeugmasse 46 zu überwachen. An der Energiespeicherkontrollvorrichtung 38 ist der Energiespeicher 14 unmittelbar zur Aufladung verbunden, wobei der Energiespeicher 14 eine direkte Masseverbindung zum Fahrzeugchassis zur Ausbildung einer Fahrzeugmasse 46 umfasst. Die Fahrzeugmasse 46 ist über die Schutzleiterverbindung 42 der Kontaktierungseinrichtung 22 mit der Masse 44 der Stromaufladevorrichtung 10 verbunden. Der Energiespeicher 14 versorgt einen Inverter 62 mit Spannung, so dass dieser eine PWM-modulierte Spannung zum Antrieb eines Elektromotors 64 bereitstellen kann, um den Vortrieb des Fahrzeugs 12 im Fahrzustand zu ermöglichen. Die wesentlichen elektrischen Komponenten des Elektrofahrzeugs 12 können über die Isolationsüberwachungseinrichtung 34 elektrisch überwacht werden, wobei diese Daten über den Datenkommunikationskanal 32 an die Stromaufladevorrichtung 10 weitergegeben werden können und dort über eine Fahrzeugtesteinrichtung 50 analysiert werden können. Überschreiten die Werte kritische Bereiche, so kann eine Abschaltung des Aufladevorgangs mittels der Differenzstrom-Überwachungseinrichtung 26 erfolgen. Die Kontaktierungsfehlereinheit 48 überwacht den fehlerfreien elektrischen Anschluss der Kontaktierungseinrichtung 22 zwischen Stromaufladevorrichtung 10 und Elektrofahrzeug 12.

Die Erfindung verhindert das Auftreten von für Menschen gefährliche Fehlerströme bei einer Gleichspannungsversorgung eines Fahrzeugs, die von üblichen Fehlerstromschutzeinrichtungen (RCDs) nicht erkannt werden können, da beispielsweise wechselstrombehaftete Fehlerströme von hohen Gleichströmen überlagert sind. Mittels der in der Stromaufladevorrichtung umfassten Differenzstrom- Überwachungseinrichtung kann ein sicheres und zuverlässiges Aufladen eines Elektrofahrzeugs überwacht und durchgeführt werden. Die Differenzstrom-Überwachungseinrichtung kann in öffentlichen Stromtanksäulen nachgerüstet werden und übertrifft die derzeit gültigen Sicherheitsstandards.

## Patentansprüche

1. Stromaufladevorrichtung (10) für ein Elektrofahrzeug (12) mit elektrischem Energiespeicher (14), umfassend zumindest eine Gleichrichtereinrichtung (16) zur Umwandlung einer Versorgungsspannung (18) in eine Auflade-Gleichspannung (20) während eines Aufladevorgangs des Energiespeichers (14) des Elektrofahrzeugs (12), eine Kontaktierungseinrichtung (22) zur Kontaktierung eines Steckverbindungs-Stromanschlusses (24) des Elektrofahrzeugs (12) und eine Differenzstrom-Überwachungseinrichtung (26) zur Detektion einer Stromdifferenz in der Kontaktierungseinrichtung (22) und/oder dem Elektrofahrzeug (12) während eines Aufladevorgangs des Energiespeichers (14) des Elektrofahrzeugs (12),
**gekennzeichnet dadurch,**
**dass** die Differenzstrom-Überwachungseinrichtung (26) zumindest zur Erkennung einer Gleichstromdifferenz Δ*I* ausgelegt ist und zumindest ein Abschaltelement (28) umfasst, dass bei einer Überschreitung einer vorbestimmbaren Gleichstromabschaltdifferenz über eine vorbestimmbare Abschaltzeit eine Unterbrechung des Aufladevorgangs bewirken kann,
wobei die Kontaktierungseinrichtung (22) einen Datenkommunikationskanal (32) umfasst, der einen Datenaustausch zwischen einer Isolationsüberwachungseinrichtung (34) des Elektrofahrzeugs (12) und der Differenzstrom-Überwachungseinrichtung (26) bereitstellt und zumindest einen Isolationswiderstand *R*_{F} (72) auslesen kann, um Stromabschaltdifferenzen und/oder Stromabschaltzeiten der Differenzstrom-Überwachungseinrichtung (26) einzustellen.

2. Stromaufladevorrichtung nach Anspruch 1,
**dadurch gekennzeichnet,**
**dass** die Differenzstrom-Überwachungseinrichtung (26) eine allstromsensitive Differenzstrom-Überwachungseinrichtung (26) ist, die eingerichtet ist, sowohl eine Gleichstromabschaltdifferenz, eine Wechselstromabschaltdifferenz und eine Pulsstromabschaltdifferenz zu erkennen, wobei das Abschaltelement (28) eingerichtet ist, bei Überschreitung einer vorbestimmbaren Gleich-, Wechsel- oder Pulsstromabschaltdifferenz (36) über eine vorbestimmbare Gleich-, Wechsel- oder Pulsstromabschaltzeit eine Unterbrechung des Aufladevorgangs zu bewirken.

3. Stromaufladevorrichtung nach Anspruch 2,
**dadurch gekennzeichnet,**
**dass** die Gleich-, Wechsel,- und Pulsstromabschaltdifferenz einen im wesentlichen gleichen Effektivbetragswert besitzen und die Gleich-, Wechsel- und Pulsstromabschaltzeit im wesentlichen gleiche Zeitspannen sind.

4. Stromaufladevorrichtung nach einem der vorangegangenen Ansprüche,
**dadurch gekennzeichnet,**
**dass** die Stromaufladevorrichtung (10) eine Ladereglereinrichtung (30) umfasst, die einen energiespeicherspezifischen Aufladevorgang regeln kann.

5. Stromaufladevorrichtung nach einem der vorangegangenen Ansprüche,
**dadurch gekennzeichnet,**
**dass** die Kontaktierungseinrichtung (22) als Datenkommunikationskanal (32), insbesondere eine Powerline-Verbindung oder einer seriellen Datenleitungsverbindung umfasst.

6. Stromaufladevorrichtung nach einem der vorangegangenen Ansprüche,
**dadurch gekennzeichnet,**
**dass** der Datenkommunikationskanal (32) einen Datenaustausch zwischen einer Energiespeicherkontrollvorrichtung (38) des Elektrofahrzeugs (12) und der Ladereglereinrichtung (30) bereitstellt und insbesondere zur Regelung des Aufladevorgangs relevante Energiespeicherdaten wie Ladespannung, Ladestrom, Ladekapazität und vergleichbares auslesen kann.

7. Stromaufladevorrichtung nach einem der vorangegangenen Ansprüche,
**dadurch gekennzeichnet,**
**dass** die Differenzstrom-Überwachungseinrichtung (26) unipolar eingerichtet ist und sowohl eine Stromdifferenz in Stromrichtung von Stromladeeinrichtung (10) zum Elektrofahrzeug (12) als auch eine Stromdifferenz in Stromrichtung von Elektrofahrzeug (12) zur Stromladeeinrichtung (10) erkennen kann.

8. Stromaufladevorrichtung nach einem der vorangegangenen Ansprüche,
**dadurch gekennzeichnet,**
**dass** die Kontaktierungseinrichtung (22) eine Schutzleiterverbindung (42) umfasst, die eine Potentialverbindung zwischen Masse (42) der Stromaufladevorrichtung (10) und Fahrzeugmasse (44) herstellen kann, und die Differenzstrom-Überwachungseinrichtung (26) eine Kontaktierungsfehlereinheit (48) zur Feststellung eines Kontaktierungsfehlers, eines Kurzschlussfehlers und/oder eines Verpolungsfehlers umfasst, die bei Fehlerfeststellung das Abschaltelement (28) zur Unterbrechung des Aufladevorgangs aktivieren kann.

9. Stromaufladevorrichtung nach einem der vorangegangenen Ansprüche,
**dadurch gekennzeichnet,**
**dass** die Stromaufladevorrichtung (10) eine Fahrzeugtesteinrichtung (50) umfasst, die eine selektive Aktivierung von elektrischen Fahrzeugkomponenten bei Überwachung einer Stromdifferenz vornehmen kann, um zumindest die Funktion der fahrzeuginternen Isolationsüberwachungseinrichtung (34) zu überprüfen.

10. Stromaufladevorrichtung nach einem der vorangegangenen Ansprüche,
**dadurch gekennzeichnet,**
**dass** die Differenzstrom-Überwachungseinrichtung (26) einen Summenstromwandler (40) zur Detektion einer Gleich-, Wechsel,- und Pulsstromdifferenz und/oder eine Überstromüberwachungseinrichtung zur Begrenzung eines Aufladestroms umfasst.

11. Stromaufladevorrichtung nach Anspruch 10,
**dadurch gekennzeichnet,**
**dass** die Differenzstrom-Überwachungseinrichtung (26) zur Detektion einer Stromdifferenz einen Summenstromwandler (40) umfassend zwei Messwicklungen gleicher Windungszahl, einen Gegentaktoszillator (52), eine Oszillator-Steuereinheit (54), eine Kompensationsstrom-Filtereinrichtung (56) und eine Differenzstrom-Analyseeinheit (58) umfasst, wobei die Messwicklungen als Schwingungsinduktivitäten des Gegentaktoszillators (52) verschaltet sind und der Gegentaktoszillator (52) mittels eines durch die Oszillator-Steuereinheit (54) erzeugbaren Kompensationsstroms die B-H-Kennlinie (60) eines Summenstromwandlerjochs (40) gleichmäßig durchfahren kann, wobei der Kompensationsstrom durch die Kompensationsstrom-Filtereinrichtung (56) in einen Gleichstromdifferenzanteil und einen Wechselstromdifferenzanteil aufteilbar und von der Differenzstrom-Analyseeinheit (58) auf Überschreitung einer vorbestimmbaren Gleichstrom- und/oder Wechselstromabschaltdifferenz über einer vorbestimmbaren Abschaltzeit überwacht werden kann, wonach die Differenzstrom-Analyseeinheit (58) das Abschaltelement (28) zur Unterbrechung des Aufladevorgangs aktivieren kann.

## Claims

1. A power charging device (10) for an electric vehicle (12) with an electric energy store (14), comprising at least one rectifier means (16) for converting a supply voltage (18) into a charging direct voltage (20) during a charging process of the energy store (14) of the electric vehicle (12), a contacting means (22) for contacting a plug-in connection supply point (24) of the electric vehicle (12), and a residual current monitoring device (26) for detecting a current difference in the contacting means (22) and/or the electric vehicle (12) during a charging process of the energy store (14) of the electric vehicle (12),
**characterised in that**
the residual current monitoring device (26) is designed at least for detection of a direct current difference Δ*I* and comprises at least one shut-off element (28) which can interrupt the charging process when a predeterminable direct current shutoff difference is exceeded over a predeterminable shutoff time,
the contacting means (22) comprises a data communication channel (32) which provides an exchange of data between an insulation monitoring means (34) of the electric vehicle (12) and the residual current monitoring device (26) and can read at least one insulation resistance *R_{F}* (72) in order to set a current shutoff difference and/or shutoff times of the residual current monitoring device (26).

2. The power charging device according to claim 1,
**characterised in that**
the residual current monitoring device (26) is a residual current monitoring device (26) which is sensitive to all current and is set up to recognise a direct current shutoff difference, an alternating current shutoff difference and a pulse current shutoff difference, the shutoff element (28) being set up to interrupt the charging process when a predeterminable direct, alternating or pulse current shutoff difference (36) is exceeded over a predeterminable direct, alternating or pulse current shutoff time.

3. The power charging device according to claim 2,
**characterised in that**
the direct, alternating and pulse current shutoff differences have an essentially equal absolute effective value and the direct, alternating and pulse current shutoff times essentially last for the same periods of time.

4. The power charging device according to any one of the preceding claims,
**characterised in that**
the power charging device (10) comprises a charge regulator means (30) which can control an energy-specific charging process.

5. The power charging device according to any one of the preceding claims,
**characterised in that**
the contacting means (22) comprises a data communication channel (32), in particular a power line connection or a serial data line connection.

6. The power charging device according to any one of the preceding claims,
**characterised in that**
the data communication channel (32) provides an exchange of data between an energy store control device (38) of the electric vehicle (12) and the charge regulator means (30) and in particular can read relevant energy store data, such as charging voltage, charging current, charging capacity and the like, in order to control the charging process.

7. The power charging device according to any one of the preceding claims,
**characterised in that**
the residual current monitoring device (26) is unipolar and can recognise both a current difference in the current direction from the power charging device (10) to the electric vehicle (12) and a current difference in the current direction from the electric vehicle (12) to the power charging device (10).

8. The power charging device according to any one of the preceding claims,
**characterised in that**
the contacting means (22) comprises a protective conductor connection (42) which can produce a potential connection between earth (42) of the power charging device (10) and the vehicle earth (44), and the residual current monitoring device (26) can comprise a contacting fault unit (48) for determining a contacting fault, a short circuit fault and/or reverse polarity fault which may, during fault determination, activate the shutoff element (28) to interrupt the charging process.

9. The power charging device according to any one of the preceding claims,
**characterised in that**
the power charging device (10) comprises a vehicle test means (50) which can selectively activate electric vehicle components when monitoring a current difference in order to check at least the function of the insulation monitoring means (34) inside the vehicle.

10. The power charging device according to any one of the preceding claims,
**characterised in that**
the residual current monitoring device (26) comprises a summation current transformer (40) for detecting a direct, alternating and pulse current difference and/or an overcurrent monitoring means for defining a charging current.

11. The power charging device according to claim 10,
**characterised in that**
the residual current monitoring device (26) for detecting a current difference comprises a summation current transformer (40) comprising two measurement windings each with an equal number of turns, a push-pull oscillator (52), an oscillator control unit (54), a compensation current filtering means (56) and a differential current analysis unit (58), the measurement windings being connected as vibration inductances of the push-pull oscillator (52), and the push-pull oscillator (52) being able to uniformly traverse the B/H characteristic curve (60) of a yoke (40) of the summation current transformer by means of a compensation current which can be produced by the oscillator control unit (54), it being possible to split the compensation current through the compensation current filtering means (56) into a direct current difference portion and an alternating current difference portion, and to monitor said compensation current using the differential current analysis unit (58) for an overshoot of a predeterminable direct current and/or alternating current shutoff difference over a predeterminable shutoff time, whereupon the differential current analysis unit (58) can activate the shutoff element (28) to interrupt the charging process.

## Revendications

1. Dispositif de chargement électrique (10) pour un véhicule électrique (12) ayant un accumulateur d'énergie électrique (14), le dispositif de chargement électrique (10) comprenant au moins un moyen de redresseur (16) pour la transformation d'une tension d'alimentation (18) en une tension continue de chargement (20) pendant un processus de chargement de l'accumulateur d'énergie (14) du véhicule électrique (12), un moyen de contact (22) qui établit un contact à une borne électrique (24) pour une fiche de raccordement du véhicule électrique (12) et un dispositif de surveillance (26) de courant différentiel résiduel pour la détection d'une différence de courant dans le moyen de contact (22) et/ou dans le véhicule électrique (12) pendant un processus de chargement de l'accumulateur d'énergie (14) du véhicule électrique (12),
**caractérisé en ce que**
le dispositif de surveillance (26) de courant différentiel résiduel est destiné au moins pour la détection d'une différence de courant continu Δ*I* et comprend au moins un élément de coupure (28) qui peut causer une interruption du processus de chargement quand une différence de coupure de courant continu prédéterminée est dépassée sur un temps de coupure prédéterminé,
le moyen de contact (22) comprenant un canal (32) de communication de données qui prévoit un échange de données entre un moyen (34) de surveillance d'isolement du véhicule électrique (12) et le dispositif de surveillance (26) de courant différentiel résiduel et qui peut lire au moins une résistance d'isolement *R_{F}* (72) afin d'ajuster des différences de coupure de courant et/ou des temps de coupure de courant du dispositif de surveillance (26) de courant différentiel résiduel.

2. Dispositif de chargement électrique selon la revendication 1,
**caractérisé en ce que**
le dispositif de surveillance (26) de courant différentiel résiduel est un dispositif de surveillance (26) de courant différentiel résiduel qui est sensitif de courant continu et de courant alternatif et qui est destiné à identifier une différence de coupure de courant continu, une différence de coupure de courant alternatif et une différence de coupure de courant d'impulsions, l'élément de coupure (28) étant destiné à interrompre le processus de chargement quand une différence de coupure (36) de courant continu, de courant alternatif ou de courant d'impulsions prédéterminée est dépassée sur un temps de coupure de courant continue, de courant alternatif ou e courant d'impulsions prédéterminé.

3. Dispositif de chargement électrique selon la revendication 2,
**caractérisé en ce que**
la différence de coupure de courant continue, de courant alternatif ou de courant d'impulsions a une valeur effective absolue essentiellement la pareille et le temps de coupure de courant continu, de courant alternatif et de courant d'impulsions dure essentiellement sur les mêmes intervalles de temps.

4. Dispositif de chargement électrique selon l'une quelconque des revendications précédentes,
**caractérisé en ce que**
le dispositif de chargement électrique (10) comprend un moyen (30) de régulateur de chargement qui peut contrôler un processus de chargement distinct à l'accumulateur d'énergie.

5. Dispositif de chargement électrique selon l'une quelconque des revendications précédentes,
**caractérisé en ce que**
le moyen de contact (22) comprend un canal (32) de communication de données, notamment une connexion d'une ligne électrique ou une connexion d'une ligne de données.

6. Dispositif de chargement électrique selon l'une quelconque des revendications précédentes,
**caractérisé en ce que**
le canal (32) de communication de données prévoit un échange de données entre un dispositif de commande (38) de l'accumulateur d'énergie du véhicule électrique (12) et le moyen (30) de régulateur de chargement et notamment peut lire des données d'accumulateur d'énergie pertinentes, par exemple la tension de chargement, le courant de chargement, la capacité de chargement et ce genre de choses, afin de contrôler le processus de chargement.

7. Dispositif de chargement électrique selon l'une quelconque des revendications précédentes,
**caractérisé en ce que**
le dispositif de surveillance (26) de courant différentiel résiduel est unipolaire et peut identifier une différence de courant dans l'écoulement de courant à partir du dispositif de chargement électrique (10) au véhicule électrique (12) et une différence de courant dans l'écoulement de courant à partir du véhicule électrique (12) au dispositif de chargement électrique (10).

8. Dispositif de chargement électrique selon l'une quelconque des revendications précédentes,
**caractérisé en ce que**
le moyen de contact (22) comprend une connexion (42) de conducteur de protection qui peut produire une connexion de potentiel électrique entre la masse (42) du dispositif de chargement électrique (10) et la masse de véhicule (44), et **en ce que** le dispositif de surveillance (26) de courant différentiel résiduel peut comprendre une unité (48) de faute de contact pour la détermination d'un faute de contact, d'un faute de défaut de circuit et/ou un faute de l'inversion de polarités qui peut activer l'élément de coupure (28) d'interrompre le processus de chargement pendant que le faute est déterminé.

9. Dispositif de chargement électrique selon l'une quelconque des revendications précédentes,
**caractérisé en ce que**
le dispositif de chargement électrique (10) comprend un moyen (50) de test de véhicule qui peut activer sélectivement des composants électriques du véhicule pendant qu'une différence de courant est surveillée afin de vérifier au moins la fonction du moyen (34) de surveillance d'isolement à l'intérieur de véhicule.

10. Dispositif de chargement électrique selon l'une quelconque des revendications précédentes,
**caractérisé en ce que**
le dispositif de surveillance (26) de courant différentiel résiduel comprend un transformateur (40) de courant sommateur pour la détection d'une différence de courant continu, de courant alternatif et de courant d'impulsions et/ou un moyen de surveillance contre les surintensités pour la limitation d'un courant de chargement.

11. Dispositif de chargement électrique selon la revendication 10, **caractérisé en ce que**
le dispositif de surveillance (26) de courant différentiel résiduel pour la détection d'une différence de courant comprend un transformateur (40) de courant sommateur comprenant deux enroulements de mesure, chacun avec le même nombre d'enroulements, un oscillateur équilibré (52), une unité (54) de commande d'oscillation, un moyen (56) de filtre de courant de compensation et une unité (58) d'analyse de courant différentiel résiduel, les enroulements de mesure étant reliés comme inductances d'oscillations de l'oscillateur équilibré (52), et l'oscillateur équilibré (52) pouvant traverser uniformément la courbe caractéristique B/H (60) d'une culasse (40) de transformateur de courant sommateur au moyen d'un courant de compensation produit par l'unité (54) de commande d'oscillation, le courant de compensation pouvant diviser au moyen du moyen (56) de filtre de courant de compensation à obtenir une partie d'une différence de courant continu et une partie d'une différence de courant alternatif et pouvant être surveillé en utilisant l'unité (58) d'analyse de courant différentiel résiduel afin d'identifier qu'une différence de coupure de courant continu et/ou de courant alternatif prédéterminée soit dépassée sur un temps de coupure prédéterminé, à la suite de quoi l'unité (58) d'analyse de courant différentiel résiduel peut activer l'élément de coupure (28) à interrompre le processus de chargement.
